# EUROPÄISCHE PATENTSCHRIFT

(11) **EP 1 148 092 B1**
(45) Veröffentlichungstag und Bekanntmachung des Hinweises auf die Patenterteilung: **12.01.2005**
(21) Anmeldenummer: 01109236.8
(22) Anmeldetag: 14.04.2001
(51) Int. Cl.: C08K 13/06, C08L 21/00, C08K 5/54

(54) **Abmischungen von mindestens einem Füllstoff und Organosiliciumverbindungen, Verfahren zu deren Herstellung und deren Verwendung**
Mixtures of at least one filler and organosilicon compounds, process for their preparation and their use
Mélanges constitués d'au moins une charge et des composés d'organosilices, leur production et utilisation

(30) Priorität: 18.04.2000 DE 10019554
(43) Veröffentlichungstag der Anmeldung: 24.10.2001
(73) Patentinhaber: Degussa AG, 40474 Düsseldorf (DE)
(72) Erfinder: Luginsland, Hans-Detlef, Dr., 50968 Köln (DE)

(56) Entgegenhaltungen:
- EP-A- 0 680 997
- EP-A- 0 732 362
- EP-A- 0 864 605

## Beschreibung

Die vorliegende Erfindung betrifft Abmischungen von mindestens einem Füllstoff und Organosiliciumverbindungen, ein Verfahren zu deren Herstellung und deren Verwendung.

Es ist bekannt, daß hydrolysierbare organofunktionalisierte Silane, die die Fähigkeit besitzen mit Hydroxylgruppen enthaltenden Füllstoffen, wie z.B. natürlichen und synthetischen Silicaten, Carbonaten, Gläsern und Metalloxiden, zu reagieren, in vielen Anwendungsgebieten zur Oberflächenmodifizierung oder Haftvermittlung Verwendung finden.
Eine Reihe dieser organofunktionalisierten Silane, insbesondere schwefelenthaltende Alkoxysilane der allgemeinen Formel Y-Sₓ-Z, wobei Y: R¹R²R³Si-R⁴, mit R¹, R², R³ gleich oder unabhängig voneinander sein können: C₁ bis C₄ Alkyl, C₁ bis C₄ Alkoxy; R⁴ kann C₁ bis C₆ linear oder verzweigtes Alkyliden sein; x ist 1 bis 10; Z kann H, CN, oder besonders bevorzugt Y sein, werden bekanntlich in der Kautschuktechnologie als Haftvermittler zwischen Füllstoff und Kautschuk verwendet (EP 501 227, Gummi, Fasern, Kunststoffe 51, 416-424 (1998)).

Desweiteren ist bekannt, daß solche hydrolysierbare organofunktionalisierte Silane in Gegenwart von flüssigem oder oberflächengebundenem Wasser zu hochmolekularen Polysiloxanen kondensieren und dadurch zumindest teilweise ihre Wirksamkeit verlieren können, was aus technischer und ökonomischer Sicht nicht tragbar ist (Silane Coupling Agents, sec. Ed. Edwin P. Plueddemann, Plenum Press). Zudem sind solche organofunktionellen Silane meist Flüssigkeiten und damit verarbeitungstechnisch häufig schwieriger zu handhaben als feste, rieselfähige Produkte.

Daher werden flüssige organofunktionelle Silane auch als feste, trägerfixierte Abmischungen, insbesondere auch für die Kautschuktechnologie, angeboten und verwendet. Als Trägermaterialien finden vornehmlich poröse Feststoffe mit einer hohen Absorptionsfähigkeit Verwendung. Diese Trägermaterialien sollen aus ökonomischer Sicht möglichst viel flüssiges Silan aufnehmen, keine Reaktion mit dem Silan eingehen oder eine Polykondensationsreaktion des Silans begünstigen und das Silan während der Verarbeitung komplett und möglichst schnell wieder freigeben. Zudem ist gefordert, daß das im Produkt verbleibende Trägermaterial zu keiner Verschlechterung der Produkteigenschaften führt.

Es ist verständlich, daß eine gute Lagerstabilität der Abmischung dann gewährleistet ist, wenn der Träger keine Feuchtigkeit und/oder oberflächenfunktionelle Gruppen, die mit dem organofunktionellen Silan reagieren können, besitzt. Für die Verwendung als Träger werden viele verschiedene Materialien, wie zum Beispiel Industrieruße, Wachse, Kreiden, Kaoline und natürliche oder synthetische Kieselsäuren untersucht. Dabei unterscheiden sich die verschiedenen Trägermaterialien nicht nur in ihrer Absorptionsfähigkeit, sondern auch in ihrer Reaktionsträgheit gegenüber dem Silan.

Als vorteilhaft hinsichtlich der Adsorptionskapazität, der Rieselfähigkeit und der Lagerstabilität hat sich in der Kautschuktechnologie die Abmischung der Silane mit Ruß bewährt (DE 27 47 277).
Organosiliciumabmischungen sind mit weißen, unbehandelten, mineralischen Trägern aus DE 22 55 577 und mit getrockneter Kieselsäure als Träger, wobei die Abmischung dann verschlossen gelagert werden muß, um das Phänomen der Kondensation zu minimieren, aus WO 97/07165 bekannt.
Bei einem Produkt gemäß DE 22 55 577 wird auf Grund der Hydrolyseanfälligkeit lediglich eine Lagerstabilität von 3 Monaten gewährleistet (Produktinformation Verstärkungsadditiv Si 69, X 50-S, X 50 der Degussa AG).

Nachteilig ist die schwarze Farbe der Rußabmischungen (DE 27 47 277), die eine Anwendung für farbige Produkte ausschließt, die schlechte Lagerstabilität (DE 22 55 577, WO 97/07165) auf Grund der immer vorhandenen Feuchte und der reaktiven Hydroxylgruppen, und die geringe Adsorptionsfähigkeit von Wachs.

Aufgabe der Erfindung ist es, eine weiße Abmischung zur Verfügung zu stellen, die eine verbesserte Lagerstabilität aufweist.

Gegenstand der Erfindung ist eine Abmischung von mindestens einem Füllstoff und Organosiliciumverbindungen der allgemeinen Formel Y-Sₓ-Z, wobei Y = R¹R²R³Si-R⁴- und R¹, R², R³ gleich oder verschieden sein können und aus C₁ bis C₄ Alkyl oder C₁ bis C₄ Alkoxy bestehen, R⁴ aus linear oder verzweigtem Alkyliden mit 0-6 C-Atomen, vorzugsweise 2-4 C-Atomen, besteht, x eine Zahl von 1 bis 10, vorzugsweise 2 bis 5, ist, und Z aus H, CN, oder Y besteht, dadurch gekennzeichnet, daß der Füllstoff oberflächenbehandelte, hydrophobe, gefällte Kieselsäure ist und der Gehalt an Organosiliciumverbindung 30 bis 70 Gew.-% bezogen auf die Abmischung ist.

Bevorzugt können Organosiliciumverbindungen der Formel Y-Sₓ-Z verwendet werden, wobei Y = R¹R²R³Si-R⁴- und R¹, R², R³ = Methoxy oder Ethoxy, R⁴ = CH₂CH₂CH₂, x ist eine Zahl von 1 bis 10, und Z aus H, CN, oder Y besteht. Besonders bevorzugt kann man Organosiliciumverbindungen der Formel (C₂H₅O)₃Si-(CH₂)₃-Sₓ-(CH₂)₃-Si(OC₂H₅)₃, x ist eine Zahl von 1 bis 10, einsetzen.

Der Gehalt an Organosiliciumverbindungen kann vorzugsweise 40 bis 60 Gew.-%, bezogen auf die Abmischung betragen.

Die oberflächenbehandelte, hydrophobe, gefällte Kieselsäure kann eine BET-Oberfläche von 50 bis 200 m²/g, vorzugsweise 80 bis 120 m²/g, und eine DBP-Adsorption von 200 bis 350 g/100g, vorzugsweise 210 bis 250 g/100g, und eine Feuchtigkeit von 2-6 %, vorzugsweise 2,5 bis 3,5 %, besitzen.
Oberflächenbehandelte, hydrophobe, gefällte Kieselsäuren sind beispielsweise aus DE 1 172 245 und DE 25 13 608 bekannt und zeichnen sich durch eine äußerst geringe Hydrodroxylgruppendichte, niedrige Methanolbenetzbarkeit und einen niedrigen Feuchtigkeitsgehalt aus. Diese hohe Hydrophobie der Kieselsäure ermöglicht die Verwendung als Trägermaterial für die oben beschriebenen hydrolyseempfindlichen Organosilane. Bevorzugt können die beiden hydrophoben Kieselsäuren Sipernat D10 und Sipernat D17 der Degussa-Hüls AG verwendet werden.

Ein weiterer Gegenstand der Erfindung ist die Herstellung der Abmischung, wobei die Organosiliciumverbindung in einem Mischaggregat bei Temperaturen < 50°C homogen auf die oberflächenbehandelte, hydrophobe, gefällte Kieselsäure aufgedüst wird.
Die Herstellung der Abmischung ist im allgemeinen nach kurzer Zeit beendet. Als Mischaggregate können trogförmige Pulvermischer mit rotierendem Propellerwerkzeug verwendet werden.

Die erfindungsgemäße Abmischung kann in Kautschukmischungen verwendet werden. Die Abmischungen können der Kautschukmischung in einer Menge zugesetzt werden, sodaß 0,1 bis 50 Gew.-%, vorzugsweise 0,1 bis 20 Gew.-%, Organosiliciumverbindung, bezogen auf die Menge des eingesetzten Kautschuk-Füllstoffs, zugegeben wird. Die Kautschukmischungen können aus mindestens einem Synthesekautschuk und/oder Naturkautschuk und mindestens einer Kieselsäure und/oder Ruß als Kautschuk-Füllstoff bestehen. Bevorzugte Synthesekautschuke sind beispielsweise in W. Hofmann, Kautschuktechnologie, Genter Verlag, Stuttgart 1980 beschrieben und können Polybutadien (BR), Polyisopren (IR), Lösungs-/Emulsions-Styrol-Butadien-Copolymerisate mit Styrolgehalten von 1 bis 60, vorzugsweise 5 bis 50 Gew.-% (SBR), Isobutylen/Isopren-Copolymerisate (IIR), Butadien/Acrylnitril-Copolymere mit Acrylnitrilgehalten von 5 bis 60 Gew.-%, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke sein.

Die Kautschukmischungen können weitere Kautschukhilfsmittel enthalten, wie unter anderem Reaktionsbeschleuniger, Reaktionsverzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Die Organosilane der allgemeinen Struktur Y-Sₓ-Z können allein als Vernetzer dienen. In der Regel empfiehlt sich aber die Zugabe von mindestens einem weiteren Vernetzer. Als weitere Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der Kautschukmischungen kann bei Temperaturen von 80 bis 200°C, bevorzugt 130 bis 180 °C, gegebenenfalls unter Druck von 10 bis 200 bar erfolgen. Die Herstellung der Kautschukmischung kann in üblichen Mischaggregaten, wie Walzen, Innenmischern und Mischextrudern, durchgeführt werden.

Die erfindungsgemäße Abmischung kann zur Herstellung von Formkörpern, insbesondere Luftreifen, Reifenlaufflächen, Kabelmänteln, Schläuchen, Treibriemen, Förderbändern, Walzenbelägen, Schuhsohlen, Dichtungen, Profilen und Dämpfungselementen verwendet werden.

### Beispiel 1:

In Beispiel 1 ist die erfindungsgemäße Herstellung einer Abmischung beschrieben.

Herstellung einer 50:50 Abmischung aus hydrophobierter Kieselsäure mit dem Handelnamen Sipernat D17 (Degussa-Hüls AG) und dem Organopolysulfansilan Bis-(3-[Triethoxysilyl]-propyl)tetrasulfan (TESPT) mit dem Handelsnamen Si 69 (Degussa-Hüls AG):
In einem Henschelmischer FM 40 mit 4 Mischwerkzeugen (1* Bodenräumer, 2* Flachmischwerkzeuge, 1* Hornmischwerkzeug) wird 3 kg Sipernat D17 vorgelegt. Bei 400 UpM und 20 °C wird 1 Minute vorgemischt und dann 3 kg Si 69 mit 40 bar durch eine 0,3 mm Düse eingespritzt und nach beendeter Zugabe die fertige Abmischung entnommen.

### Beispiel 2:

Beispiel 2 beschreibt die Herstellung der Kautschukmischung.

Die für die Herstellung der Kautschukmischungen verwendete Rezeptur ist in Tabelle 1 angegeben. Dabei bedeutet die Einheit phr Gewichtsanteile bezogen auf 100 Teile des eingesetzten Rohkautschuks.

**Tabelle 1**

| Substanz | Vergleichsbeispiel Menge [phr] | Beispiel B1 Menge [phr] |
|---|---|---|
| 1. Stufe | | |
| Buna VSL 5025-1 | 96,0 | 96,0 |
| Buna CB 24 | 30,0 | 30,0 |
| Ultrasil VN3 | 80,0 | 80,0 |
| ZnO | 3,0 | 3,0 |
| Stearinsäure | 2,0 | 2,0 |
| Naftolen ZD | 10,0 | 10,0 |
| Vulkanox 4020 | 1,5 | 1,5 |
| Protector G35P | 1,0 | 1,0 |
| X50-S | 12,8 | - |
| Abmischung Beispiel 1 | - | 12,8 |
| | | |

| 2. Stufe | | |
|---|---|---|
| Batch Stufe 1 | | |
| | | |

| 3. Stufe | | |
|---|---|---|
| Batch Stufe 2 | | |
| Vulkacit D | 2,0 | 2,0 |
| Vulkacit CZ | 1,5 | 1,5 |
| Schwefel | 1,5 | 1,5 |

Bei dem Polymer VSL 5025-1 handelt es sich um ein in Lösung polymerisiertes SBR-Copolymer der Bayer AG mit einem Styrolgehalt von 25 Gew.-% und einem 1,2-Butadiengehalt von 50 %. Das Copolymer enthält zudem 37,5 phr Öl.

Bei dem Polymer Buna CB 24 handelt es sich um ein cis 1,4 Polybutadien (Neodymtyp) der Bayer AG mit cis 1,4-Gehalt von 97 %, einem trans 1,4-Gehalt von 2 %, einem 1,2-Gehalt von 1 %.

Die Kieselsäure Ultrasil VN3 GR der Degussa-Hüls AG besitzt eine BET-Oberfläche von 175 m²/g.

Bei der im Vergleichsbeispiel eingesetzten Silanabmischung handelt es sich um eine 50:50 Abmischung von Bis-(3-[Triethoxysilyl]-propyl)tetrasulfan (TESPT) und N330 Ruß, bekannt unter dem Handelsnamen X50-S (Degussa-Hüls AG).

Als aromatisches Öl wird Naftolen ZD der Firma Chemetall verwendet; bei Vulkanox 4020 handelt es sich um PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Die Kautschukmischungen werden dreistufig in einem Innenmischer entsprechend der folgenden tabellarischen Aufstellung (Tabelle 2) hergestellt:

**Tabelle 2:**

| **Stufe 1** | |
|---|---|
| **Einstellungen** | |
| Mischaggregat | Werner & Pfleiderer E-Typ |
| Friktion | 1:1,11 |
| Drehzahl | 70 min ⁻¹ |
| Stempeldruck | 5,5 bar |
| Leervolumen | 1,6 L |
| Füllgrad | 0,55 |
| Durchflußtemp. | 80 °C |

| **Mischvorgang** | |
|---|---|
| 0 bis 1 min | Buna VSL 5025-1 + Buna CB 24 |
| 1 bis 3 min | 1/2 Ultrasil VN3, ZnO, Stearinsäure, Naftolen ZD, Silanabmischung |
| 3 bis 4 min | 1/2 Ultrasil VN3, Vulkanox 4020, Protector G35P |
| 4 min | säubern |
| 4 bis 5 min | mischen |
| 5 min | säubern |
| 5 bis 6 min | mischen und ausfahren |
| Batch-Temp. | 140-150°C |
| Lagerung | 24 h bei Raumtemperatur |

| **Stufe 2** | |
|---|---|
| **Einstellungen** | |
| Mischaggregat | wie in Stufe 1 bis auf: |
| Drehzahl | 80 min ⁻¹ |
| Füllgrad | 0,53 |
| Durchflußtemp. | 80 °C |

| **Mischvorgang** | |
|---|---|
| 0 bis 2 min | Batch Stufe 1 aufbrechen |
| 2 bis 6 min | Batchtemperatur 150°C durch Drehzahlvariation halten |
| 6 min | ausfahren |
| Batch-Temp. | 150-155°C |
| Lagerung | 4 h bei Raumtemperatur |

| **Stufe 3** | |
|---|---|
| **Einstellungen** | |
| Mischaggregat | wie in Stufe 1 bis auf: |
| Drehzahl | 40 min ⁻¹ |
| Füllgrad | 0,51 |
| Durchflußtemp. | 50 °C |

| **Mischvorgang** | |
|---|---|
| 0 bis 2 min | Batch Stufe 2 + Vulkacit CZ + Vulkazit D + Schwefel |
| 2 min | ausfahren und auf Labormischwalzwerk Fell bilden |
| | Durchflußtemperatur 50°C) |
| | Homogenisieren: |
| | 3* links, 3* rechts einschneiden und umklappen sowie |
| | 8* bei engem Walzenspalt (1 mm) und |
| | 3* bei weitem Walzenspalt (3,5 mm) stürzen und |
| | anschließend ein Fell ausziehen |
| Batch-Temp. | 85-95°C |

Das allgemeine Verfahren zur Herstellung von Kautschukmischungen und deren Vulkanisate ist in "Rubber Technology Handbook", W. Hofmann, Hanser Verlag 1994 beschrieben.

Die Vulkanisationszeit für die Prüfkörper beträgt 60 Minuten bei 165°C.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C Zugfestigkeit Spannungswerte Bruchdehnung | DIN 53504, ISO 37 |
| Shore-A-Härte, 23°C | DIN 53 505 |
| Viskoelastische Eigenschaften, 0 und 60°C, 16 Hz, 50 N Vorkraft und 25 N Amplitudenkraft Komplexer Modul E*, Verlustfaktor tan δ | DIN 53 513, ISO 2856 |
| Weiterreißwiderstand | DIN 53 507; ISO 34 |
| DIN-Abrieb, 10 N Kraft | DIN 53 516 |

Tabelle 4 zeigt die gummitechnischen Daten.

**Tabelle 4:**

| **Mischung** | | **-1-** Vergleichsbeispiel | **-2-** Beispiel B1 |
|---|---|---|---|
| **Rohmischungsergebnisse:** | | | |
| ML 1+4 (1.Mischstufe) | [ME] | 121 | 122 |
| ML 1+4 (3.Mischstufe) | [ME] | 70 | 67 |
| t10% | [min] | 1,36 | 1,40 |
| t90% | [min] | 28,0 | 27,3 |
| D120-Dmin bei 165°C | [dNm] | 17,6 | 18,9 |

| **Vulkanisatergebnisse:** | | | |
|---|---|---|---|
| Shore-A-Härte | [SH] | 67 | 68 |
| Zugfestigkeit | [MPa] | 14,7 | 15,2 |
| Spannungswert 100 % | [MPa] | 2,4 | 2,4 |
| Spannungswert 200 % | [MPa] | 6,2 | 6,1 |
| Spannungswert 300 % | [MPa] | 11,9 | 11,4 |
| Bruchdehnung | [%] | 350 | 360 |
| Weiterreißwiderstand | [N/mm] | 14 | 19 |
| DIN-Abrieb | [mm³] | 69 | 77 |
| Dyn. Dehnmodul E*(0°C) | [MPa] | 26,8 | 30,1 |
| Dyn. Dehnmodul E*(60°C) | [MPa] | 9,7 | 10,4 |
| Verlustfaktor tan δ(0°C) | [ ] | 0,489 | 0,472 |
| Verlustfaktor tan δ(60°C) | [ ] | 0,133 | 0,126 |

Aus Tabelle 4 ist ersichtlich, dass die weiße Mischung mit der erfindungsgemäßen Abmischung vergleichbare gummitechnische Eigenschaften aufweist, wie die schwarze Vergleichsmischung.

### Beispiel 3:

Die in Beispiel 1 beschriebene Abmischung und das Vergleichsbeispiel X 50 der Firma Degussa-Hüls AG, hergestellt nach DE 2 255 577, werden bei Umgebungstemperatur in einer Dose gelagert. X 50 ist eine 1:1 Abmischung von Ultrasil VN 3 und Si69. In regelmäßigen Zeitabständen wird 2 g Probe entnommen, diese mit 100 ml Cyclohexan im Ultraschallbad kalt ausgeschüttelt, filtriert und anschließend der monomere Silangehalt mittels HPLC-Analyse bestimmt. Niedrig oligomerisierte Silane, die bekanntlich weiterhin kautschukaktiv sind, werden mit dieser Methode nicht bestimmt.

In Tabelle 5 sind die wiedergefundenen Organosilanmengen in Abhängigkeit der Lagerzeit aufgeführt. Auf Grund der unvollständigen Extraktion wird von den eingesetzten 50 % Organosilan zu Anfang lediglich 43,3 % beziehungsweise 43,6 % wiedergefunden und dient somit als Referenzwert.

**Tabelle 5**

| Lagerzeit bei RT [Monate] | 0 | 1.5 | 3 | 4,5 | 6 | 9 | 12 |
|---|---|---|---|---|---|---|---|
| Organosilan aus Beispiel 1 [Gew.-%] | 43,3 | 43,8 | 39,6 | | 37,3 | 35,9 | 34,0 |
| X 50 gemäß DE 22 55 577 [Gew.-%] | 43,6 | 39,8 | 32,6 | 27,3 | 24,6 | | |

Wie aus Tabelle 5 ersichtlich ist, ist der Verlust an monomerem Organosilan in der Abmischung nach einem Jahr lediglich 9,3 %, während der Verlust bei dem Vergleichsbeispiel nach bereits 1/2 Jahr 19 % beträgt.

### Beispiel 4:

Die Abmischung aus Beispiel 1 wird nach verschiedenen Lagerzeiten gummitechnisch untersucht (Tabelle 6). Dabei sind die Werte des Beispieles B1 auf die Vergleichsmischung (X50-S / Referenz mit Index 100%) bezogen.
Die Herstellung der Mischungen erfolgte wie im Beispiel 2 beschrieben.

**Tabelle 6**

| Lagerzeit [Monate] | 0 | 1,5 | 3 | 6 | 9 | 12 |
|---|---|---|---|---|---|---|
| Index [%] | | | | | | |
| **Rohmischungsergebnisse:** ML 1+4 (3.Mischstufe) | 96 | 122 | 101 | 99 | 105 | 107 |
| D120-Dmin bei 165°C | 108 | 112 | 99 | 105 | 106 | 112 |
| **Vulkanisatergebnisse:** Shore-A-Härte Zugfestigkeit Spannungswert 200 % Bruchdehnung | 101 103 98 103 | 103 102 100 103 | 102 110 94 115 | 97 107 97 106 | 101 90 94 99 | 98 102 105 97 |
| Weiterreißwiderstand | 136 | 108 | 105 | 96 | 104 | 78 |
| DIN-Abrieb | 112 | 107 | 108 | 104 | 102 | 106 |
| Dyn. Dehnmodul E*(0°C) Dyn. Dehnmodul E*(60°C) Verlustfaktor tan δ(0°C) Verlustfaktor tan δ(60°C) | 116 107 97 95 | 123 111 99 98 | 104 106 97 88 | 105 108 99 98 | 103 97 102 99 | 118 109 100 87 |

Wie man anhand von Tabelle 6 erkennt, liegen die Veränderungen in Abhängigkeit der Lagerzeit innerhalb der Schwankungsbreite der Messungen, sodaß die Abmischung als lagerstabil angesehen werden kann.

Die erfindungsgemäße Abmischung zeichnet sich durch ihr weißes, pulverförmiges und trockenes Erscheinungsbild, sowie einer guten Einarbeitbarkeit und Lagerstabilität aus.

## Patentansprüche

1. Abmischung von mindestens einem Füllstoff und Organosiliciumverbindungen der allgemeinen Formel I
Y-Sₓ-Z (I),
wobei
Y = R¹R²R³Si-R⁴- und R¹, R², R³ gleich oder verschieden sein können und aus C₁ bis C₄ Alkyl oder C₁ bis C₄ Alkoxy bestehen,
R⁴ aus linear oder verzweigtem Alkyliden mit 0-6 C-Atomen besteht,
x eine Zahl von 1 bis 10 ist, und
Z aus H, CN, oder Y besteht,
**dadurch gekennzeichnet,**
**daß** der Füllstoff oberflächenbehandelte, hydrophobe, gefällte Kieselsäure ist und der Gehalt an Organosiliciumverbindung 30 bis 70 Gew.-% bezogen auf die Abmischung ist.

2. Abmischungen nach Anspruch 1,
**dadurch gekennzeichnet,**
**daß** R¹, R², R³ = Ethoxy und R⁴ = CH₂CH₂CH₂ ist.

3. Abmischungen nach Anspruch 1,
**dadurch gekennzeichnet,**
**daß** die oberflächenmodifizierte, hydrophobe, gefällte Kieselsäure eine BET-Oberfläche von 50 bis 200 m²/g, eine DBP-Adsorpion von 200 bis 350 g/100g und eine Feuchtigkeit von 2-6 % besitzt.

4. Abmischungen nach Anspruch 3,
**dadurch gekennzeichnet,**
**daß** die oberflächenmodifizierte, hydrophobe, gefällte Kieselsäure eine BET-Oberfläche von 80 bis 120 m²/g, eine DBP-Adsorption von 210 bis 250 g/100g und eine Feuchtigkeit von 2,5 bis 3,5 % besitzt.

5. Verfahren zur Herstellung der Abmischung nach einem der Ansprüche 1 bis 4,
**dadurch gekennzeichnet,**
**daß** die Organosiliciumverbindung in einem Mischaggregat bei einer Temperatur < 50°C homogen auf die oberflächenbehandelte, hydrophobe, gefällte Kieselsäure aufgedüst wird.

6. Verwendung der Abmischung nach einem der Ansprüche 1 bis 4 in Kautschukmischungen.

7. Verwendung der Abmischung nach Anspruch 6 in Kautschukmischungen,
**dadurch gekennzeichnet,**
**daß** man die Abmischung in einer Menge zusetzt, daß 0,1 bis 50 Gew.-% Organosiliciumverbindung bezogen auf die Menge des eingesetzten Kautschuk-Füllstoffs zugegeben wird.

8. Verwendung der Abmischung nach Anspruch 6 in Kautschukmischungen,
**dadurch gekennzeichnet,**
**daß** sie mindestens einen Synthesekautschuk und/oder Naturkautschuk und mindestens eine Kieselsäure und/oder Ruß als Kautschuk-Füllstoff enthalten.

9. Verwendung der Abmischung nach Anspruch 1, zur Herstellung von Formkörpern, insbesondere Luftreifen, Reifenlaufflächen, Treibriemen, Förderbändern, Walzenbelägen,Dämpfungselementen, Schuhsohlen, Schläuchen, Kabelmänteln, Profilen und Dichtungen.

## Claims

1. Mixture of at least one filler and organosilicon compounds of the general formula I
Y-Sₓ-Z (I),
wherein
Y = R¹R²R³Si-R⁴- and R¹, R², R³ may be identical or different and are C₁ to C₄ alkyl or C₁ to C₄ alkoxy,
R⁴ represents linear or branched alkylidene having from 0 to 6 carbon atoms,
x is a number from 1 to 10, and
Z is H, CN or Y,
**characterised in that**
the filler is surface-treated, hydrophobic, precipitated silica and the content of organosilicon compound is from 30 to 70 wt.%, based on the mixture.

2. Mixtures according to claim 1,
**characterised in that**
R¹, R², R³ = ethoxy and R⁴ = CH₂CH₂CH₂.

3. Mixtures according to claim 1,
**characterised in that**
the surface-modified, hydrophobic, precipitated silica has a BET surface area of from 50 to 200 m²/g, a DBP adsorption of from 200 to 350 g/100 g and a moisture content of from 2 to 6 %.

4. Mixtures according to claim 3,
**characterised in that**
the surface-modified, hydrophobic, precipitated silica has a BET surface area of from 80 to 120 m²/g, a DBP adsorption of from 210 to 250 g/100 g and a moisture content of from 2.5 to 3.5 %.

5. Process for the preparation of the mixture according to any one of claims 1 to 4,
**characterised in that**
the organosilicon compound is homogeneously applied from a nozzle to the surface-treated, hydrophobic, precipitated silica in a mixing unit at a temperature < 50°C.

6. Use of the mixture according to any one of claims 1 to 4 in rubber mixtures.

7. Use of the mixture according to claim 6 in rubber mixtures,
**characterised in that**
the mixture is added in such an amount that from 0.1 to 50 wt.% of organosilicon compound, based on the amount of rubber filler used, is added.

8. Use of the mixture according to claim 6 in rubber mixtures,
**characterised in that**
they contain at least one synthetic rubber and/or natural rubber and at least one silica and/or carbon black as rubber filler.

9. Use of the mixture according to claim 1
in the production of moulded bodies, especially tyres, tyre treads, drive belts, conveyor belts, roller coverings, damping elements, shoe soles, hoses, cable coverings, profile sections and gaskets.

## Revendications

1. Mélange d'au moins une charge et de composés organosiliciques de formule générale I
Y-Sₓ-Z (I)
dans laquelle Y = R¹R²R³Si-R⁴- et R¹, R², R³ peuvent être identiques ou différents et sont constitués d'alkyle en C₁ à C₄ ou d'alcoxy en C₁ à C₄,
R⁴ est constitué d'alkylures linéaires ou ramifiés portant 0 à 6 atomes de C,
x est un nombre de 1 à 10 et
Z est constitué de H, CN ou Y,
**caractérisé en ce que**
la charge est un acide silicique précipité traité en surface, hydrophobe, et la teneur en composé organosilicique est de l'ordre de 30 à 70 % en poids par rapport au mélange.

2. Mélanges selon la revendication 1,
**caractérisés en ce que**
R¹, R², R³ = éthoxy et R⁴ = CH₂CH₂CH₂.

3. Mélanges selon la revendication 1,
**caractérisés en ce que**
l'acide silicique précipité modifié en surface, hydrophobe, possède une surface BET de 50 à 200 m²/g, une adsorption DBP de 200 à 350 g/100 g et une humidité de 2 à 6 %.

4. Mélanges selon la revendication 3,
**caractérisés en ce que**
l'acide silicique précipité modifié en surface, hydrophobe, possède une surface BET de 80 à 120 m²/g, une adsorption DBP de 210 à 250 g/100 g et une humidité de 2,5 à 3,5 %.

5. Procédé de fabrication du mélange selon l'une quelconque des revendications 1 à 4,
**caractérisé en ce que**
le composé organosilicique dans un mélangeur est appliqué par pulvérisation à une température < 50°C sur l'acide silicique précipité traité en surface, hydrophobe.

6. Utilisation du mélange selon l'une quelconque des revendications 1 à 4 dans des mélanges de caoutchoucs.

7. Utilisation du mélange selon la revendication 6 dans des mélanges de caoutchoucs,
**caractérisés en ce que**
le mélange est ajouté en une quantité telle qu'on ajoute 0,1 % à 50 % en poids de composé organosilicique par rapport à la quantité de charge de caoutchouc utilisée.

8. Utilisation du mélange selon la revendication 6 dans des mélanges de caoutchoucs,
**caractérisés en ce qu'**
ils contiennent au moins un caoutchouc de synthèse et/ou un caoutchouc naturel et au moins un acide silicique et/ou du noir de carbone en tant que charge de caoutchouc.

9. Utilisation du mélange selon la revendication 1 pour fabriquer des corps moulés, en particulier des pneus, des bandes de roulement de pneus, des courroies de commande, des bandes transporteuses, des garnitures de rouleaux, des éléments amortisseurs, des semelles de chaussures, des tuyaux, des gaines de câble, des profilés et des joints.
